# EUROPEAN PATENT SPECIFICATION

(11) **EP 2 433 400 B1**
(45) Date of publication and mention of the grant of the patent: **13.02.2013**
(21) Application number: 10721155.9
(22) Date of filing: 21.05.2010
(51) Int. Cl.: H04L 12/66

(54) **METHOD FOR QUEUEING PACKETS BETWEEN DIFFERENT LAYERS OF A COMMUNICATION PROTOCOL**
VERFAHREN FÜR EIN WARTESCHLANGENMODELL FÜR PAKETE ZWISCHEN VERSCHIEDENEN SCHICHTEN EINES KOMMUNIKATIONSPROTOKOLLS
PROCÉDÉ DE MISE EN FILE D'ATTENTE DE PAQUETS ENTRE DIFFÉRENTES COUCHES D'UN PROTOCOLE DE COMMUNICATION

(30) Priority: 22.05.2009 ES 200930197
(43) Date of publication of application: 28.03.2012
(73) Proprietor: Telefónica, S.A., 28013 Madrid (ES)
(72) Inventor: KIRNECH NEBOT, Xavier, E-28013 Madrid (ES); RODRIGUEZ RODRIGUEZ, Pablo, E-28013 Madrid (ES); GONZALEZ CALABOZO, José, María, E-28013 Madrid (ES); ABILLA NAVARRO, Xavier, Ignasi, E-28013 Madrid (ES); CUMPLIDO DOMINGUEZ, Raul, E-28013 Madrid (ES); GONZALEZ BLANCO, Rubén, E-28013 Madrid (ES); CARPIO ESQUINA, María, Dolores, E-28013 Madrid (ES); PERALES FERRERA, David, E-28013 Madrid (ES); FERRAN BENNSTROM, Christian, E-28013 Madrid (ES)
(74) Representative: Carpintero Lopez, Francisco
(86) International application number: PCT/EP2010/057048
(87) International publication number: WO 2010/133695

(56) References cited:
- WO-A2-02/073881
- US-A1- 2006 256 793
- US-B1- 6 822 960

## Description

### Field of the Invention

The present invention applies to the field of the digital packet networks and, more specifically, to the inverse multiplexing of heterogeneous channels in said networks.

### Background of the Invention

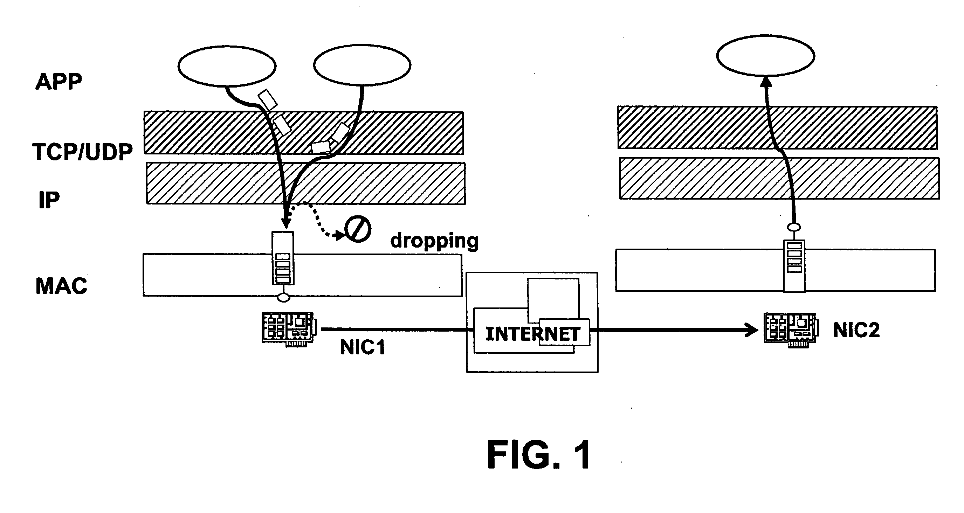

Current networks have a layer-based architecture: each layer uses the services of the next lower layer and offers services to the upper layers. Layer operation is transparent for the upper layers. In current operating systems, in the implementation of this layer architecture each physical network interface has associated therewith in the link layer a transmission queue, in which the packets of the upper layers are stored for sending them through the communications channel. This transmission queue empties at the speed at which the physical interface can send information over the communications channel. In current implementations of network layer architecture, each layer generates traffic for the lower layers and does not concern itself with what occurs in the lower layer. In the event that the upper layers generate traffic more quickly than the physical device can transmit, the transmission queue associated with the device fills up and the operating system throws out the packets, causing local packet losses for the system performing the transmission, as is shown in Figure 1. In other words, in the current situation of network layer architecture, independence between layers and excess speed in the upper layers cause local packet losses for the system performing the transmission (without leaving the physical medium). In these cases, as the current network layer architecture is designed, the protocols of the upper layers are responsible for treating the packet loss from one end of the communication to the other end, either local to the system that is transmitting or at any other intermediate point of the communication between layers.

On the other hand, adding a bandwidth of several low cost communications channels to create a single channel with a bandwidth greater than that of a single channel is a common technique in the world of networks which is known as inverse multiplexing. If it is done at a physical level or at a link level, it is known as bonding. When the different media which are to be added are homogenous, the aggregation of bandwidth is simple and effective because it can be done based on predefined rules (according to the nominal bandwidth of each channel).

However, when the different media which are to be added are heterogeneous and have dynamically changing characteristics, the aggregation of bandwidth becomes a complex problem. In these cases, the distribution of the flow of information generated by the upper layers (in the application end) through the different media must be done taking into account the latency and bandwidth characteristics of each medium at the time of sending traffic therethrough.

This is especially complex in the case of mobile communications networks for applications which require high bandwidth and real-time communications in the uplink, since the bandwidth of the mobile communications channel varies dynamically and the adaptation to the conditions of the channel for real-time applications must be virtually instantaneous.

The aggregation of channels or parallel connections for the transfer of static data (web pages, files), in which the order of arrival of the information at the destination is not important, is widely known in the Internet and there are several algorithms which implement it as of today: use of parallel TCP connections for the transfer of files by means of FTP and downloading web pages, etc. Furthermore, most of these implementations use downlinks, in which the bandwidth is usually greater than that of uplinks.

European patent EP 1653706 B1 tries to solve this problem by means of mechanisms for the inverse multiplexing of the data flow (specifically, video) with a high transmission speed to divide this flow into a plurality of flows with a lower transmission speed. The bandwidth is thus doubled in the upward direction. Specifically, the distribution of the flow in the system described in EP 1653706 B1 is based on the parity of each inbound packet, each packet being alternatively distributed in each of the different connections intended for such purpose. The algorithm classifies the inbound packets by their sequence number. Furthermore, a leaky bucket algorithm is used for the purpose of regulating the packet flow randomly arriving at the multiplexing server.

However, the mechanism for inverse multiplexing of EP 1653706 B1 lacks real-time adaptation because it is based on algorithms which distribute the load in a predefined manner (in this case, by the parity). For this reason, the division of the flow is static. In other words, in this solution, the inverse multiplexing algorithm is configured and started up, but it is then not adapted (because it is conceived for situations in which the bandwidth is known beforehand).

Furthermore, in other inverse multiplexing algorithms, the traffic is distributed in a single algorithmic process and from predetermined rules in which it is decided how the flow is distributed between the output interfaces based on the input flow.

United States patent application US 2006/2567930 A1 discloses a method for distributing traffic in a network in which the transmission speed of packets is greater than the transmission capacity of the transport channel. The packets that are to be transmitted must be queued and US 2006/2567930 describes how inputting and outputting packets sequentially to/from a memory in whcich the packets are organised as a queue. The queueing is performed for each layer of the communication protocol separately. More particularly, two neighboring layers of the communication protocol are connected by a queueing buffer, so that each packet of the higher layer can be connected to each packet of the lower layer by using the respective queueing buffer. Nonetheless, this approach of flow control does not associate the packet queues in the higher layer in a one-to-one way with the packet queues in the lower layer.

### Summary of the Invention

The present invention tries to resolve the problems mentioned above by means of a method for transmitting packets between an application of an emitting equipment and an application of a receiving equipment through a packet network.

Specifically, in a first aspect of the present invention, a method for transmitting packets between an application of an emitting equipment and an application of a receiving equipment through a packet network is provided, in which the transmission speed of said packets is greater than the transmission capacity of the transport channel of a connection of said packet network. The method comprises the step of, in an emitting equipment, storing in an input queue of a determined protocol layer, a plurality of packets coming from a higher order protocol layer. The method furthermore comprises the steps of: in said emitting equipment, controlling the insertion of each of said packets in an output queue of a plurality of output queues of a lower order protocol layer by means of a plurality of processes implemented in said determined protocol layer, in which each of said output queues is associated in a one-to-one manner with one of said processes and each of said output queues is in turn associated with a determined physical interface, said processes being configured to control the insertion of packets in said output queues depending on the outbound packet flow of said physical interfaces to prevent the packet loss in said output queues; and transmitting the packets inserted in said output queues associated with said physical interfaces through respective transport channels of said packet network.

In a particular embodiment, at least two of said physical interfaces are different from one another.

In a particular embodiment, at least two of said physical interfaces have different maximum speeds, the packets being transmitted through each physical interface at the speed of the transport channel of said physical interface.

Preferably, said determined protocol layer is a demultiplexing or inverse multiplexing layer.

Preferably, said step of controlling the insertion of packets in said output queues by means of said plurality of processes comprises the steps of: each of said processes monitoring the state of its corresponding output queue; and said processes competing with one another to send packets from said input queue to their corresponding output queue.

Preferably, said step of controlling the insertion of packets in said output queues by means of said plurality of processes comprises the steps of: each process analyzing the packet load accumulated in its associated output queue in the lower layer; and if the output queue of a process is full beyond a certain threshold, said process does not try to pop a determined packet off the input queue, whereas if the number of packets of an output queue is less than or equal to a certain threshold, the process controlling said output queue tries to pop a determined packet off the input queue to insert it in its associated output queue, the process that first invokes the input queue is the one to achieve it.

Preferably, each output queue is emptied according to the speed of the physical interface associated therewith.

In a particular embodiment, before said step of storing in said input queue said plurality of packets coming from a higher order protocol layer, the following step occurs: re-encapsulating said packets and assigning them a respective sequence number to facilitate their subsequent sorting in the receiver end.

In a particular embodiment, said determined protocol layer is implemented in the application layer and, more specifically, at the Real-time Transport Protocol level.

In another aspect of the present invention, a method for receiving packets by an application of a receiving equipment is provided, in which said packets have been sent through a packet network, and in which the transmission speed of said packets is greater than the transmission capacity of the transport channel of a connection of said packet network. Said packets have been sent according to the method for transmitting packets described above.

Preferably, said method comprises the step of: resorting said packets received in a protocol layer) before delivering them to a higher order protocol layer.

In a particular embodiment, any of the methods described above comprises the step of sorting and retrieving packets by means of implementing a mechanism based on one of the following aspects: on the duplication of packets to minimize the loss probability, on a time window, on a sequence window, on a timestamp difference, on the dispersion within a sorting window.

Furthermore, any of said methods can comprise the step of retrieving packets by negative acknowledgement.

In a particular embodiment, the packets are transmitted through a mobile telephony network which is connected to said packet network and said physical interfaces are chosen from the following group: GPRS, EDGE, 3G, HSUPA and Ethernet.

In another aspect of the present invention, the use of any of the methods described for transmitting high quality videoconference with a low delay or for transmitting video surveillance images is provided.

Finally, another aspect of the present invention includes a system for transmitting packets comprising: an emitting equipment comprising a determined application; a packet network; a receiving equipment comprising that same determined application, in which the transmission speed of said packets is greater than the transmission capacity of the transport channel of a connection of said packet network. The emitting equipment comprises means for carrying out the method for transmitting described above.

Preferably, the receiving equipment comprises means for carrying out the method for receiving described above.

As can be seen, the invention provides a mechanism which allows applying inverse multiplexing on heterogeneous channels with a variable bandwidth in the uplink, such as mobile communications channels, for applications which need to transmit information in real time with a low delay (videoconference, streaming,...), distributing the load by constantly adapting to the speed of the channel. This dynamic adaptation to the speed of the channel is achieved from the state of the transmission queues of the lower layers, such that when an output queue in the lower layer is saturated, this is detected and the control process associated with the queue stops consuming of the input queue until the output queue returns to not being saturated (the number of packets drops below a determined threshold), whereby adapting virtually instantaneously.

The method of the invention implements a traffic distribution mechanism based on multiple queues and an algorithm which can be referred to as reverse flow control: the packet flow of the upper layers is controlled from the lower layers of the network architecture. In other words, instead of controlling the flow taking into account the speed of the input of a layer, the speed at which it is transmitted to the lower layers is controlled by monitoring the output of the physical layer (lower layer) to modulate the writing speed of the upper layers generating the traffic (i.e., a lower layer acts on the operation of an upper layer). This method is described in detail below.

Compared to the layer architecture of current networks, the method of the present invention is based on slightly degenerating the current layer architecture in order to be able to monitor the speed of a determined lower layer from an upper layer, in which the method for distributing traffic described in this invention is implemented. This monitoring is done indirectly through the load of the output queue associated with the physical interface, measuring the occupation of said queue. The method thus avoids this local packet loss (dropping), maintaining the output queue of each device completely occupied up to a limit, but without the occurrence of local packet losses.

The advantages of the proposed invention will become evident in the following description.

### Brief Description of the Drawings

For the purpose of aiding to better understand the features of the invention according to a preferred practical embodiment thereof and to complement this description, a set of drawings with an illustrative and non-limiting character is attached as an integral part thereof. In these drawings:
Figure 1 shows throwing out packets (dropping) in lower layers due to excess speed in upper layers, a situation which occurs in current layer architecture implementations.
Figure 2 shows a diagram of the reverse flow control according to an embodiment of the present invention.
Figure 3 shows the reverse flow control for an embodiment of the present invention.
Figure 4 shows a possible implementation of the method of the present invention, including the demultiplexing step and multiplexing step.
Figure 5 describes a specific implementation example of the method of the invention at the IP network layer level.
Figure 6 shows a possible application of the present invention to an electronic news capture solution using several inversely multiplexed mobile channels.
Figure 7 shows another possible application of the present invention to a video surveillance solution using several inversely multiplexed mobile channels

### Detailed Description of the Invention

Throughout this specification, the term "comprises" and its derivatives should not be construed in a limiting or excluding sense, i.e., it should not be construed in the sense of excluding the possibility that the element or concept to which it refers includes additional elements or steps.

Furthermore, the term socket appears throughout the present description, and this term has been incorporated to designate, in computer science terms, an abstract concept by means of which two programs (possibly located in different computers) can exchange any data flow, generally in a reliable and sorted manner. A socket is defined by a direction, a protocol and a port number.

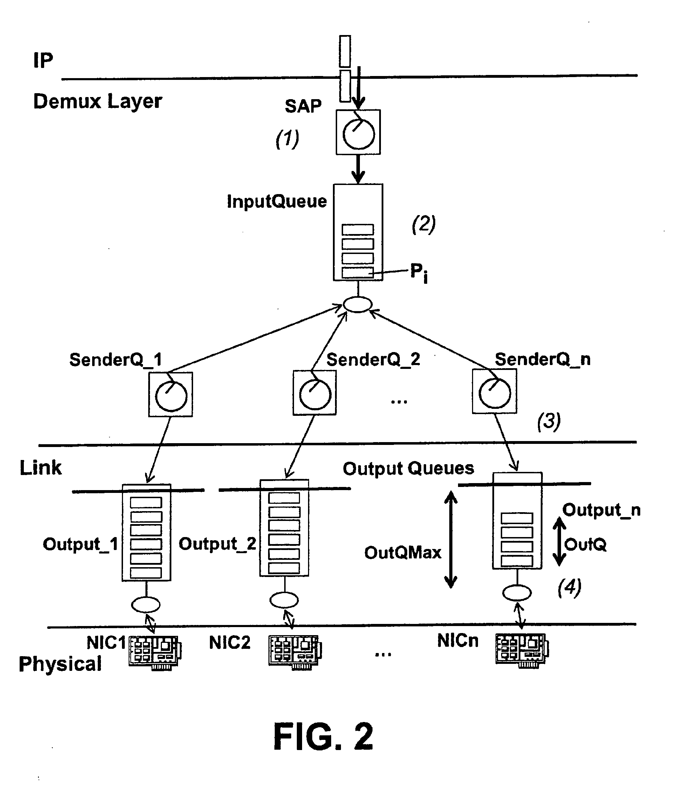

Figure 2 shows a diagram of the reverse flow control algorithm of the method of the invention. In this algorithm, processes (referred to as SenderQ_1, SenderQ_2 ... SenderQ_n in Figure 2) monitor the state of the output queue and compete with one another to send traffic from the input queue InputQueue to the interface with the lower layer. The flow is thus controlled in the reverse direction: from the output layer to the physical layer, how to load the traffic in the physical interface, depending on the speed thereof adapting the input flow, is decided.

As shown in Figure 2, an intermediate demultiplexing layer (in Figure 2, Demux Layer) is implemented between two conventional layers. In the specific implementation of Figure 2, the intermediate demultiplexing layer is implemented between the network (preferably IP) layer and link layer (in turn followed by the physical layer). Nevertheless, the method of the invention is independent of the layer in which it is implemented, being able to be implemented between other layers.

The inbound traffic in the demultiplexing layer through the service access point (SAP) undergoes a process of re-encapsulating and of assigning a sequence number, as is shown in step (1) of Figure 2. This step (1) is necessary when the packets must be resorted in the destination upon multiplexing. The inverse multiplexing is thus transparent for the protocols of the upper layers. Otherwise this step (1) is not necessary. Then it is accumulated in an input queue or buffer InputQueue, as indicated in step (2). This traffic which is accumulated in the input queue or buffer InputQueue is the traffic coming from the previous layer. By way of example in this embodiment, the traffic that is stored in the input buffer is the outbound traffic of the network layer (IP).

Associated with each communications device (and therefore with each interface with the physical medium), the algorithm provides a process (referred to as SenderQ_1, SenderQ_2 ... SenderQ_n in Figure 2) in charge of collecting traffic from the input queue or buffer InputQueue (2) and loading it in an output queue, which is depicted in step (3). The processes SenderQ_1, SenderQ_2 ... SenderQ_n consume (3) the inbound traffic accumulated in the queue or buffer InputQueue (2) according to the occupation levels of the output queues Output_1 Output_2 ... Output_n associated with the physical interfaces. These processes are in charge of the reverse flow control to prevent throwing out packets (dropping). These processes SenderQ_1, SenderQ_2 ... SenderQ_n associated with each physical transmission device NIC1 NIC2 ... NICn or physical interface compete with one another to extract packets from the input queue InputQueue (2) and to write them or insert them in the corresponding output queue Output_1 Output_2 ... Output_n (3).

This competition between processes SenderQ_1, SenderQ_2 ... SenderQ_n depends on the specific implementation of the algorithm associated with the processes. In a particular embodiment, it is implemented by means of parallel processes or threads in the same process. These parallel processes or threads are constantly in a loop that can perform the following task, which is shown by way of example in Figure 2: If a process or thread (for example, SenderQ_n) has not filled the output queue controlling Output_n until a certain considered threshold OutQMax, but the queue is only partially occupied OutQ, the process or thread goes to the input queue InputQueue of step (2) to pop off a determined packet pᵢ. All the processes SenderQ_1,... SenderQ_n try to do this at the same time, competing with one another, and the first one that invokes or calls the input queue InputQueue is the one to achieve it. If, in contrast, the queue Output_2 of a process or thread (SenderQ_2) is full (i.e., it has reached the considered threshold OutQMax), the process or thread SenderQ_2 does not try to pop off a determined packet pᵢ from the input queue InputQueue until the physical interface is able to pop off packets from the output. In other words, each output queue Output_1... Output_n, which directs packets to a respective physical interface as will be seen in step (4), can increase its size up to a maximum value OutQMax and the processes SenderQ_i try to fill the output queue up to the limit of packet loss that the physical interface is capable of withstanding.

Other alternative implementations of the competition between processes SenderQ_1,... SenderQ_n are possible.

As stated above, the demultiplexing layer can be at a network (IP) level or at a higher level (for example, an application level, as will be shown below). In an embodiment of the invention, the demultiplexing layer has been implemented in the application layer and, more specifically, at the RTP (Real-time Transport Protocol) protocol level.

Each output queue Output_1... Output_n is emptied according to the speed of the corresponding physical interface. The corresponding process SenderQ_1... SenderQ_n is in charge of maintaining its output queue at the maximum limitOutQMax but without a loss occurring due to an excess of packets.

Each process SenderQ_1... SenderQ_n is associated with a corresponding physical interface, which in turn has an IP address. The processes are continuously monitoring their respective output queue, and in the moment in which the physical device generates a gap in the output queue Output_1... Output_n because a packet has been transmitted, the corresponding process SenderQ_1... SenderQ_n detects this and again fills said gap from the input queue InputQueue of step (2).

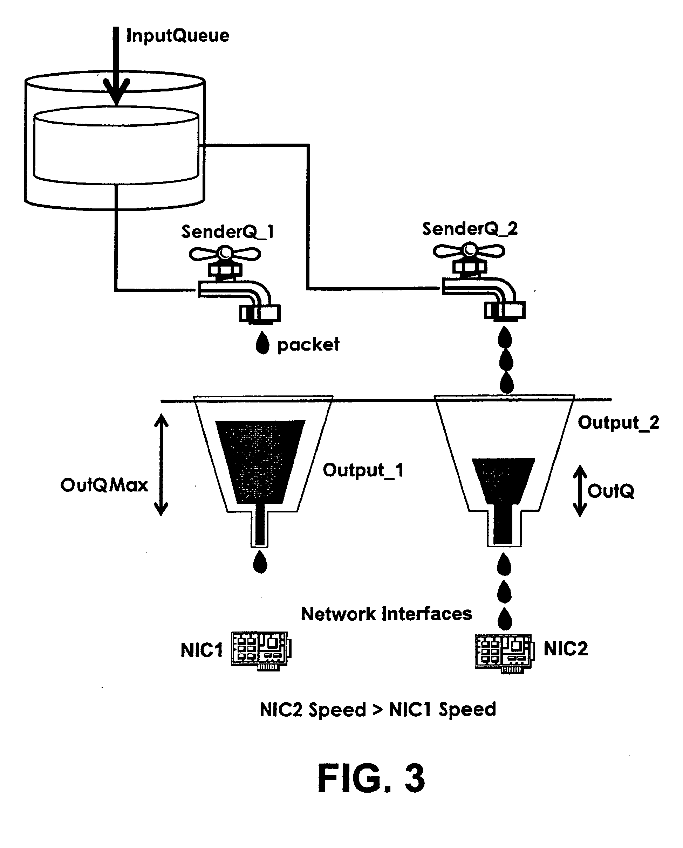

Figure 3 shows a diagram of the algorithm explained above. Specifically, it can be seen how, depending on the speed of the physical device NIC1 NIC2, the output queue controlled by a process accepts more packets coming from the input queue and this output queue also gradually empties more quickly (as a result of the speed provided by the physical device). In other words, this drawing shows the idea of the algorithm: accumulating packets in an input queue and, from the processes associated with the output queues, allowing, if they are not at limit OutQMax, the passage of packets to the output. For example, with respect to the process SenderQ_2, if the size OutQ of the output queue Output_2 is less than the threshold OutQMax, then the "faucet" is turned on. If not, it stays off.

This is a reverse flow control because it is the processes SenderQ_1... SenderQ_n themselves which inversely, from the output to the physical layer, condition and form the inbound packet flow.

It should be pointed out that the method allows inverse multiplexing on heterogeneous channels, i.e., on physical interfaces NIC1 NIC2... NICn of different natures. Non-limiting examples of these interfaces are: GPRS, EDGE, 3G, HSUPA, Ethernet, etc. Each of these interfaces can have different transmission speeds and changing conditions in the transmission speed.

The fact of inversely multiplexing on heterogeneous channels means that the packets are unsorted at reception. Optionally, if the protocols and/or applications of the upper layers for the inverse multiplexing of the invention require, different packet sorting algorithms and policies must be applied for packets which have been resorted by the inverse multiplexing. For example, if the method of the invention is implemented at the IP level, i.e., under the service access point of the IP layer, it is not necessary to apply said packet sorting algorithms, since TCP sorts the packets. If, however, the sequence is maintained, the work of the upper layers or applications is aided and effectiveness is improved.

If necessary, in order to again reorganize the original flow after traversing the inversely multiplexed channels, the method of the invention provides different mechanisms for sorting and retrieving packets specific for real-time applications. These mechanisms are configurable and can be: depending on a sequence number, a timestamp difference, the dispersion within a sorting window (percentage of packets sorted in a time and/or size window). In the event of packet losses in any of the links, a mechanism for retrieving by negative acknowledgement (Negative ACK) can optionally be activated.

With these sorting and retrieving algorithms, the inverse multiplexing can be adapted to different applications requiring a high bandwidth and real time on heterogeneous and variable channels, such as mobile communications channels.

An example of an application of the method of inverse multiplexing of the invention is described below.

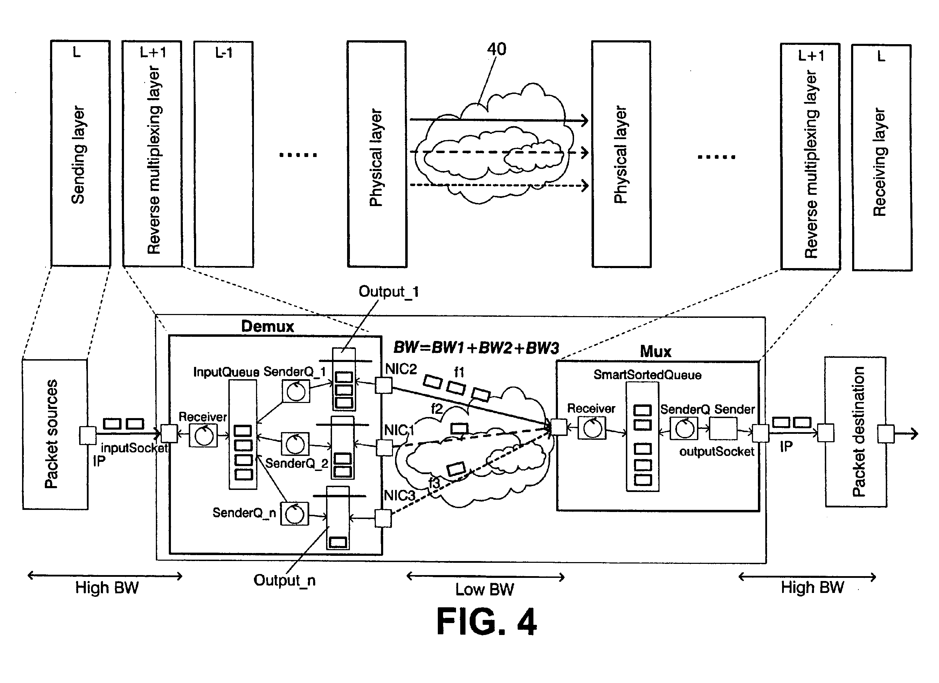

Figure 4 shows the architecture of a system implementing both the method of inverse demultiplexing and the method of inverse multiplexing with their corresponding intermediate layers.

Figure 4 depicts an end-to-end generic embodiment (i.e., without associating it with a specific layer). This embodiment covers possible specific embodiments of the invention, which may take place either under the IP layer, or at the application layer level, as a specific Proxy of the protocol controlling the sending of packets on the lower layers. Other embodiments in other levels of the layer architecture are also possible, provided there is access to the output queue of each device.

The top part of Figure 4 shows the end-to-end communication in the form of blocks: shown on the left are the layers of the end which sends packets, from the sending layer L followed by the inverse multiplexing layer L+1 up to the physical layer. Once the transmission is carried out through the physical medium, represented by a cloud or generic network 40, the packets access the receiver end: first through the physical layer and, once the possible intermediate layers have been traversed, the inverse multiplexing layer L+1, and finally the receiving layer L, are reached.

The bottom part of Figure 4 represents the steps of the method of the invention in relation to the layers of the top part. Thus, the sending layer L represents the packet source. This sending layer L provides packets to the inverse multiplexing layer L+1. The available bandwidth (BW) between these two layers L L+1 is usually high since it is a very short distance.

The next block of Figure 4 represents the implementation of the demultiplexing layer or demultiplexer at the transmission point. This layer is in charge of receiving the inbound packet flow (for example, through an input socket inputSocket) coming from the layer L and transmitting them by applying the reverse flow control on several network interfaces. This reverse flow control has been described in detail above in relation to Figure 2. For implementations in which the order of the packets is important, this module sequences and encapsulates the packets for their subsequent sorting at reception in the multiplexing layer of the other end (receiver end). The demultiplexing layer comprises: a service access point SAP for accessing the inverse multiplexing of packets at the input of layer L+1 (implemented by means of an inputSocket); an input queue or buffer InputQueue in which the packets are accumulated; and several processes SenderQ_1 SenderQ_2 ... SenderQ_n, one for each output queue Output_1 ... Output_n, which implement the reverse flow control. The method provides the respective physical interfaces with a packet flow in accordance with the speed that each associated physical device NIC1 NIC2 NIC3 can process.

Next, the sending of packets from each physical device NIC1 NIC2 NIC3 to the receiver end, through the corresponding packet network 40 is schematically shown. Generally, the bandwidth (BW) available in this network 40 is a limited resource. As a result of the inverse multiplexing applied in layer L+1, it is achieved that the total bandwidth is the sum of the bandwidths of each of the physical devices NIC1 NIC2 NIC3: BW = BW_1 + BW_2 + BW_3. In Figure 4, the references f1, f2, f3 indicate the packet flows, associated with each NIC (NIC1 NIC2 NIC3), in which the main flow is demultiplexed at the input of the demultiplexer or demultiplexing layer.

Once the packets arrive in the receiver end, the next block of Figure 4 represents the implementation of the multiplexing layer or multiplexer at the receiving point. The packets are received through several channels and, if the application or upper layer requires, the flow is reconstructed by applying the following policies for sorting and retrieving the flow (configurable as required by the upper layer):
- Sorting by time difference: it uses the packet timestamps: it waits until packets are accumulated within a determined time interval Δt and after that moment it sends them to the upper layer;
- Sorting by time difference and waiting for a maximum difference: it waits until there is a minimum time difference between the last packet and the first packet within a sorting window;

- By sequence number and dispersion within a sorting window: When there is a % of packets sorted within a window the queue can be emptied towards the upper layers;
- By negative acknowledgement (*Negative ACK*) if the loss of a packet is detected, in which case it is indicated to the demultiplexer so that it can resend it. If this option is activated, the demultiplexer saves the packets sent for a time margin (configurable) in order to be able to service the packet loss petitions.

As was explained above, these policies for sorting and retrieving are implemented within the resorting queue, which can be made up of several queues according to the selected sorting mechanism. Depending on the needs of the delay, reliability and sorting of the packets, the demultiplexer and the multiplexer can be configured with each of the previous policies.

Finally, the bottom right side of Figure 4 shows the delivery of packets from the inverse multiplexing layer L+1 to the receiving layer L. As in the emitter end, the available bandwidth (BW) between these two layers L L+1 is usually high since it is a very short distance.

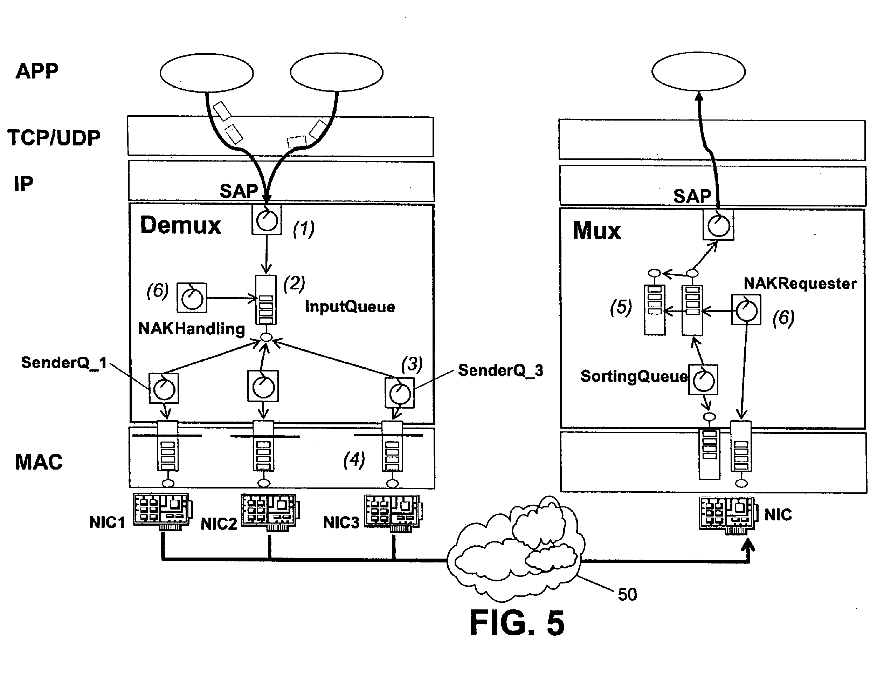

Figure 5 shows a specific implementation of the method of the invention, in which the inverse multiplexing layer is implemented under the IP layer, which in turn has the TCP/UDP layer above it, which receive packets from the application layer. In this example, the inverse multiplexing layer performs the packet flow control on the packets which are to be delivered to the MAC level, which in turn delivers the packets to the physical layer. Each specific layer acts according to the explanation of Figure 4. Furthermore, this particular example includes the option of retrieving negative acknowledgement (*Negative ACK*) packet losses in step (6). A negative acknowledgement request mechanism (NAKRequester) is activated in the receiver end and the equivalent mechanism (NAKHandling) is activated in the emitter end.

Two possible applications of the method of the invention are described below. These applications have the implementation of the inverse multiplexing and inverse demultiplexing layers embedded therein as respective components by way of a Proxy for RTP (Real-time Transport Protocol) packets. Both industrial applications are designed for sending high quality video, in real time and with a low delay, by means of the inverse multiplexing of the invention of 2.5G and 3G mobile communications channels.

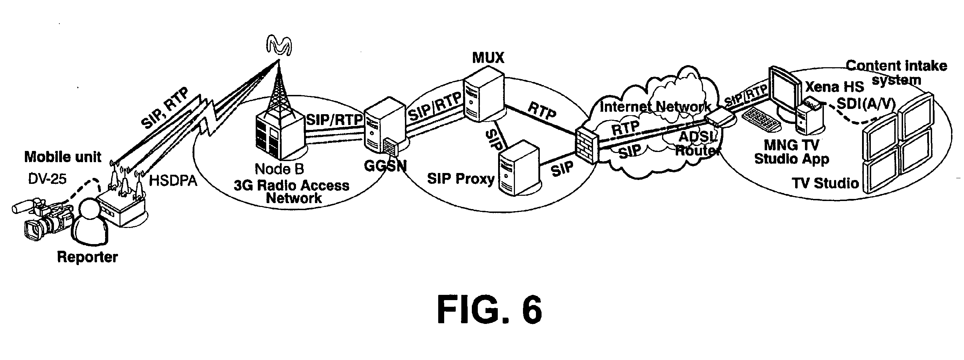

Figure 6 schematically shows one of the industrial applications of the invention consisting of a lightweight and portable TV reporter mobile unit. The mobile unit uses an implementation of the method of inverse multiplexing for transmitting high quality video in real time (videoconference) through multiple HSDPA mobile network interfaces (3.5G).

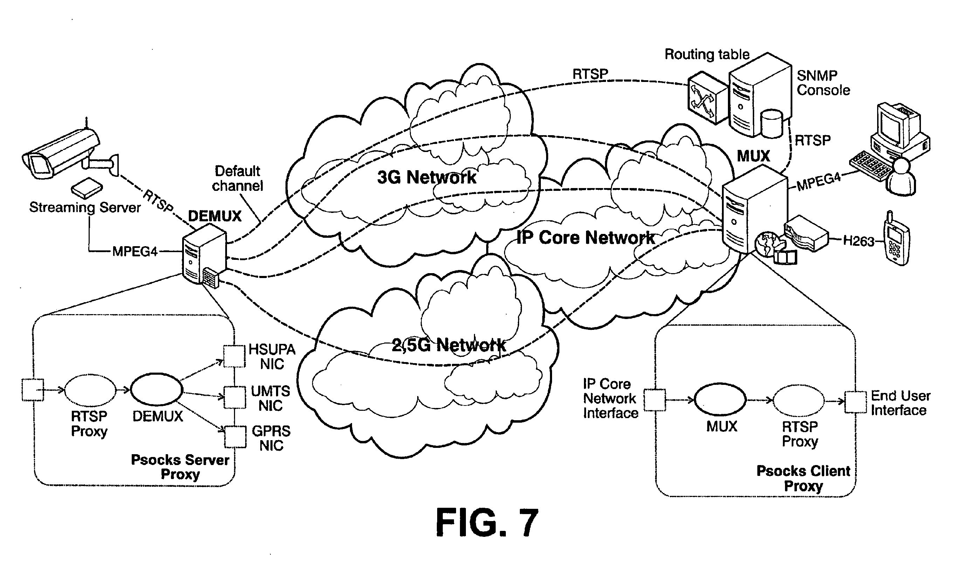

Figure 7 schematically shows a system of traffic video surveillance using the method of inverse multiplexing of the invention for transmitting high quality video in real time on demand through multiple 3G and 2.5G mobile network interfaces (GPRS).

In both implementations (Figures 6 and 7), the demultiplexer is capable of prioritizing packets in the input queue depending on the type of packet for video coding such as H.264 AVC, MPEG-4 and MPEG-TS and, should there be saturation in the input queue (step (2) depicted by the InputQueue of Figure 2), applying an intelligent discard of only the non-priority packets. By way of non-limiting example, packets which are not I frames, and/or in a configurable percentage to not degrade video quality, can be discarded. Other intelligent discard policies can alternatively be applied.

The method of the invention allows the inverse multiplexing of heterogeneous channels with variable bandwidth in real time and with a low delay (less than 2 seconds between the emitting application and the receiving application).

The implementation is configurable and extensible to other types of coding systems and packets. The multiplexer is configurable with the sorting algorithms described above. Both implementations are conceived at the application level as respective proxies: SIP and RTSP, respectively. Said proxies internally work with RTP packets and apply the reverse flow control object of the invention described above.

In view of this description and set of drawings, the person skilled in the art will understand that the invention has been described according to several preferred embodiments thereof, but multiple variations can be introduced without departing from the object of the invention as it has been claimed.

## Claims

1. Method for transmitting packets between an application of an emitting equipment and an application of a receiving equipment through a packet network (40, 50), in which the transmission speed of said packets is greater than the transmission capacity of the transport channel of a connection of said packet network (40, 50), comprising the step of:
- in an emitting equipment, storing in an input queue (InputQueue) of a determined protocol layer (Demux Layer, L+1), a plurality of packets (pᵢ) coming from a higher order protocol layer (IP, L);
the method being **characterized by** the steps of:
- in said emitting equipment, controlling the insertion of each of said packets (pᵢ) in an output queue of a plurality of output queues (Output_1, Output_2... Output_n) of a lower order protocol layer (Link, L-1) by means of a plurality of processes (SenderO_1, SenderQ_2... SenderQ_n) implemented in said determined protocol layer (Demux Layer, L+1), in which each of said output queues (Output_1, Output_2... Output_n) is associated in a one-to-one manner with one of said processes (SenderQ_1, Senders2_2... SenderQ_n) and each of said output queues (Output_1, Output_2... Output_n) is in turn associated with a determined physical interface (NIC1, NIC2, ... NICn), said processes (SenderQ_1, SenderQ_2... SenderQ_n) being configured to control the insertion of packets in said output queues (Output_1, Output_2... Output_n) depending on the outbound packet flow of said physical interfaces (NIC1, NIC2, ... NICn);
- transmitting the packets inserted in said output queues (Output_1, Output_2... Output_ n) associated with said physical interfaces (NIC1, NIC2, ... NICn) through respective transport channels of said packet network (40, 50).

2. Method of claim 1, wherein at least two of said physical interfaces (NIC1, NIC2, ... NICn) are different from one another.

3. Method of claim 1 or 2, wherein at least two of said physical interfaces (NIC1, NIC2, ... NICn) have different maximum speeds, the packets being transmitted through each physical interface (NIC1, NIC2, ... NICn) at the speed of the transport channel of said physical interface.

4. Method of any of the previous claims, wherein said determined protocol layer (Demux Layer, L+1) is a demultiplexing or inverse multiplexing layer.

5. Method of any of the previous claims, wherein said step of controlling the insertion of packets (pᵢ) in said output queues (Output_1, Output_2... Output_n) by means of said plurality of processes (SenderQ_1, SenderQ_2... SenderQ_n) comprises the steps of:
- each of said processes (SenderQ_1, SenderQ_2 ... SenderQ_n) monitoring the state of its corresponding output queue (Output_1, Output 2... Output_n); and
- said processes (SenderQ_1, SenderQ_2 ... SenderQ_n) competing with one another to send packets (pᵢ) from said input queue (InputQueue) to their corresponding output queue (Output_1, Output_2... Output_n).

6. Method of any of the previous claims, wherein said step of controlling the insertion of packets (pᵢ) in said output queues (Output-1, Output_2... Output_n) by means of said plurality of processes (SenderQ_1, SenderQ_2... SenderQ_n) comprises the steps of:
- each process (SenderQ_1, SenderQ_2... SenderQ_n) analyzing the packet load accumulated in its associated output queue (Output_1, Output_2... Output_n); and
- if the output queue (Output_1) of a process (SenderQ_1) is full beyond a certain threshold (OutQMax), said process (SenderQ_1) does not try to pop a determined packet (p;) off the input queue (InputQueue), whereas
- if the number of packets of an output queue (Output n) is less than (OutQ) or equal to a certain threshold (OutQMax), the process (SenderQ_n) controlling said output queue (Output_n) tries to pop a determined packet (pᵢ) off the input queue (InputQueue) to insert it in its associated output queue (Output_n), the process that first invokes the input queue (InputQueue) is the one to achieve it.

7. Method of any of the previous claims, wherein each output queue (Output_1... Output_n) is emptied according to the speed of the physical interface associated therewith (NIC1, NIC2, ... NICn).

8. Method of any of the previous claims, wherein before said step of storing in said input queue (InputQueue) said plurality of packets (pᵢ) coming from a higher order protocol layer (IP, L), the following step occurs:
- re-encapsulating said packets (pᵢ) and assigning them a respective sequence number to facilitate their subsequent sorting in the receiver end.

9. Method of any of the previous claims, wherein said determined protocol layer (Demux Layer, L+1) is implemented in the application layer and, more specifically, at the Real-time Transport Protocol (RTP) level.

10. Method for receiving packets by an application of a receiving equipment, in which said packets have been sent through a packet network (40, 50), and in which the transmission speed of said packets is greater than the transmission capacity of the transport channel of a connection of said packet network (40, 50), **characterized in that** said packets have been sent according to a method for transmitting packets according to any of claims 1 to 9.

11. Method of any of the previous claims, comprising the step of sorting and retrieving packets by means off the implementation of a mechanism based on one of the following aspects: on the duplication of packets to minimize the loss probability, on a time window, on a sequence window, on a timestamp difference, on the dispersion within a sorting window.

12. Method of any of the previous claims, comprising the step of retrieving packets by negative acknowledgement.

13. Method of any of the previous claims, wherein said packets are transmitted through a mobile telephony network which is connected to said packet network (40, 50) and said physical interfaces (NIC1, NIC2, ... NICn) are chosen from the following group: GPRS, EDGE, 3G, HSUPA and Ethernet.

14. System for transmitting packets comprising:
- an emitting equipment comprising a determined application;
- a packet network (40, 50);
- a receiving equipment comprising that same determined application,
in which the transmission speed of said packets is greater than the transmission capacity of the transport channel of a connection of said packet network (40, 50);
**characterized in that** said emitting equipment comprises means for carrying out the steps of the method of any of claims 1-9.

15. System of claim 14, wherein said receiving equipment comprises means for carrying out the method of claim 10.

## Patentansprüche

1. Verfahren zum Übertragen von Paketen zwischen einer Anwendung einer sendenden Einrichtung und einer Anwendung einer empfangenden Einrichtung über ein Paketnetzwerk (40, 50), wobei die Übertragungsgeschwindigkeit der Pakete größer ist als die Übertragungskapazität des Transportkanals einer Verbindung des Paketnetzwerks (40, 50), umfassend den Schritt, dass
- in einer sendenden Einrichtung in einer Eingabewarteschlange (InputQueue) einer bestimmten Protokollschicht (Demux Layer, L+1) eine Mehrzahl von von einer Protokollschicht höherer Ordnung (IP, L) kommenden Paketen (pᵢ) gespeichert wird;
wobei das Verfahren **gekennzeichnet ist durch** die Schritte:
- Kontrollieren - in der sendenden Einrichtung - der Einfügung jedes der Pakete (pᵢ) in eine Ausgabewarteschlange von einer Mehrzahl von Ausgabewarteschlangen (Output_1, Output_2... Output_n) einer Protokollschicht niederer Ordnung (Link, L-1) mittels einer Mehrzahl von in der bestimmten Protokollschicht (Demux Layer, L+1) implementierten Prozessen (SenderQ_1, SenderQ_2... SenderQ_n), wobei jede der Ausgabewarteschlangen (Output_1, Output_2... Output_n) eins zu eins einem der Prozesse (SenderQ_1, SenderQ_2... SenderQ_n) zugeordnet ist und jede der Ausgabewarteschlangen (Output_1, Output_2... Output_n) wiederum einer bestimmten physikalischen Schnittstelle (NIC1, NIC2, ... NICn) zugeordnet ist, wobei die Prozesse (SenderQ_1, SenderQ_2... SenderQ_n) dazu ausgebildet sind, die Einfügung von Paketen in die Ausgabewarteschlangen (Output_1, Output_2... Output_n) in Abhängigkeit von dem abgehenden Paketstrom der physikalischen Schnittstellen (NIC1, NIC2, ... NICn) zu kontrollieren;
- Übertragen der in die den physikalischen Schnittstellen (NIC1, NIC2, ... NICn) zugeordneten Ausgabewarteschlangen (Output_1, Output_2... Output_n) eingefügten Pakete über entsprechende Transportkanäle des Paketnetzwerks (40, 50).

2. Verfahren nach Anspruch 1, wobei mindestens zwei der physikalischen Schnittstellen (NIC1, NIC2, ... NICn) verschieden voneinander sind.

3. Verfahren nach Anspruch 1 oder 2, wobei mindestens zwei der physikalischen Schnittstellen (NIC1, NIC2, ... NICn) verschiedene Maximalgeschwindigkeiten aufweisen, wobei die Pakete über jede physikalische Schnittstelle (NIC1, NIC2, ... NICn) bei der Geschwindigkeit des Transportkanals der physikalischen Schnittstelle übertragen werden.

4. Verfahren nach einem der voranstehenden Ansprüche, wobei die bestimmte Protokollschicht (Demux Layer, L+1) eine Demultiplex- oder Invers-Multiplex-Schicht ist.

5. Verfahren nach einem der voranstehenden Ansprüche, wobei der Schritt des Kontrollierens der Einfügung von Paketen (pᵢ) in die Ausgabewarteschlangen (Output_1, Output_2... Output_n) mittels der Mehrzahl von Prozessen (SenderQ_1, SenderQ_2... SenderQ_n) die Schritte umfasst, dass
- jeder der Prozesse (SenderQ_1, SenderQ_2 ... SenderQ_n) den Status seiner korrespondierenden Ausgabewarteschlange (Output_1, Output_2... Output_n) überwacht; und dass
- die Prozesse (SenderQ_1, SenderQ_2 ... SenderQ_n) miteinander konkurrieren, um Pakete (pᵢ) von der Eingabewarteschlange (InputQueue) zu ihrer korrespondierenden Ausgabewarteschlange (Output_1, Output_2... Output_n) zu senden.

6. Verfahren nach einem der voranstehenden Ansprüche, wobei der Schritt des Kontrollierens der Einfügung von Paketen (pᵢ) in die Ausgabewarteschlangen (Output_1, Output_2... Output_n) mittels der Mehrzahl von Prozessen (SenderQ_1, SenderQ_2... SenderQ_n) die Schritte umfasst, dass
- jeder Prozess (SenderQ_1, SenderQ_2... SenderQ_n) die in seiner zugeordneten Ausgabewarteschlange (Output_1, Output_2... Output_n) akkumulierte Paketbelastung analysiert; und dass,
- wenn die Ausgabewarteschlange (Output_1) eines Prozesses (SenderQ_1) über eine bestimmte Schwelle (OutQMax) hinaus voll ist, der Prozess (SenderQ_1) nicht versucht, ein bestimmtes Paket (pᵢ) aus der Eingabewarteschlange (InputQueue) herauszuholen, während,
- wenn die Anzahl von Paketen einer Ausgabewarteschlange (Output_n) kleiner ist als (OutQ) oder gleich einer bestimmten Schwelle (OutQMax) ist, der die Ausgabewarteschlange (Output_n) kontrollierende Prozess (SenderQ_n) ein bestimmtes Paket (pᵢ) aus der Eingabewarteschlange (InputQueue) herauszuholen versucht, um es in seine zugeordnete Ausgabewarteschlange (Output_n) einzufügen, wobei dies dem Prozess gelingt, der die Eingabewarteschlange (InputQueue) zuerst aufruft.

7. Verfahren nach einem der voranstehenden Ansprüche, wobei jede Ausgabewarteschlange (Output_1... Output_n) gemäß der Geschwindigkeit der ihr zugeordneten physikalischen Schnittstelle (NIC1, NIC2, ... NICn) geleert wird.

8. Verfahren nach einem der voranstehenden Ansprüche, wobei vor dem Schritt des Speicherns der mehreren, von einer Protokollschicht höherer Ordnung (IP, L) kommenden Pakete (pᵢ) in der Eingabewarteschlange (InputQueue) der folgende Schritt stattfindet:
- Neukapseln der Pakete (pᵢ) und Zuordnen einer entsprechenden Sequenznummer zu denselben, um ihre nachfolgende Sortierung am empfängerseitigen Ende zu erleichtern.

9. Verfahren nach einem der voranstehenden Ansprüche, wobei die bestimmte Protokollschicht (Demux Layer, L+1) in der Anwendungsschicht und im Besonderen auf Real-Time Transport Protocol (RTP)-Level implementiert wird.

10. Verfahren zum Empfangen von Paketen durch eine Anwendung einer empfangenden Einrichtung, wobei die Pakete über ein Paketnetzwerk (40, 50) gesendet wurden und wobei die Übertragungsgeschwindigkeit der Pakete größer ist als die Übertragungskapazität des Transportkanals einer Verbindung des Paketnetzwerks (40, 50), **dadurch gekennzeichnet, dass** die Pakete nach einem Verfahren zum Übertragen von Paketen nach einem der Ansprüche 1 bis 9 gesendet wurden.

11. Verfahren nach einem der voranstehenden Ansprüche, umfassend den Schritt des Sortierens und Wiedergewinnens von Paketen mittels der Implementierung eines Mechanismus, der auf einem der folgenden Aspekte beruht: auf der Duplizierung der Pakete, um die Verlustwahrscheinlichkeit zu minimieren, auf einem Zeitfenster, auf einem Sequenzfenster, auf einer Zeitstempeldifferenz, auf der Verteilung innerhalb eines Sortierfensters.

12. Verfahren nach einem der voranstehenden Ansprüche, umfassend den Schritt des Wiedergewinnens von Paketen durch negative Quittung.

13. Verfahren nach einem der voranstehenden Ansprüche, wobei die Pakete über ein Mobiltelefonnetzwerk übertragen werden, welches mit dem Paketnetzwerk (40, 50) verbunden ist, und wobei die physikalischen Schnittstellen (NIC1, NIC2, ... NICn) ausgewählt sind aus folgender Gruppe: GPRS, EDGE, 3G, HSUPA und Ethernet.

14. System zum Übertragen von Paketen, umfassend:
- eine sendende Einrichtung, welche eine bestimmte Anwendung umfasst;
- ein Paketnetzwerk (40, 50);
- eine empfangende Einrichtung, welche die gleiche bestimmte Anwendung umfasst,
wobei die Übertragungsgeschwindigkeit der Pakete größer ist als die Übertragungskapazität des Transportkanals einer Verbindung des Paketnetzwerks (40, 50);
**dadurch gekennzeichnet, dass** die sendende Einrichtung Mittel umfasst zum Durchführen der Schritte des Verfahrens nach einem der Ansprüche 1 bis 9.

15. System nach Anspruch 14, wobei die empfangende Einrichtung Mittel zum Durchführen des Verfahrens nach Anspruch 10 umfasst.

## Revendications

1. Procédé destiné à transmettre des paquets entre une application d'un équipement émetteur et une application d'un équipement récepteur par le biais d'un réseau en mode paquet (40, 50), dans lequel la vitesse de transmission desdits paquets est supérieure à la capacité de transmission du canal de transport d'une connexion dudit réseau en mode paquet (40, 50), le procédé comprenant l'étape consistant à :
- dans un équipement émetteur, stocker, dans une file d'attente d'entrée (InputQueue) d'une couche de protocole déterminée (Demux Layer, L+1), une pluralité de paquets (pᵢ) en provenance d'une couche de protocole d'ordre supérieur (IP, L) ;
le procédé étant **caractérisé par** les étapes consistant à :
- dans ledit équipement émetteur, commander l'insertion de chacun desdits paquets (Pᵢ) dans une file d'attente de sortie d'une pluralité de files d'attente de sortie (Output_1, Output_2, ..., Output_n) d'une couche de protocole d'ordre inférieur (Liaison, L-1) au moyen d'une pluralité de processus (SenderQ_1, SenderQ_2, ..., SenderQ_n) mis en oeuvre dans ladite couche de protocole déterminée (Demux Layer, L+1), où chacune desdites files d'attente de sortie (Output_1, Output_2, ..., Output_n) est associée d'une manière unilatérale avec l'un desdits processus (SenderQ_1, SenderQ_2, ..., SenderQ_n), et chacune desdites files d'attente de sortie (Output_1, Output_2, ..., Output_n) est à son tour associée à une interface physique déterminée (NIC1, NIC2, ..., NICn), lesdits processus (SenderQ_1, SenderQ_2, ..., SenderQ_n) étant configurés pour commander l'insertion de paquets dans lesdites files d'attente de sortie (Output_1, Output_2, ..., Output_n) en fonction du flux de paquets sortant desdites interfaces physiques (NIC1, NIC2, ..., NICn) ;
- transmettre les paquets insérés dans lesdites files d'attente de sortie (Output_1, Output_2, ..., Output_n) associées auxdites interfaces physiques (NIC1, NIC2, ..., NICn) à travers des canaux de transport respectifs dudit réseau en mode paquet (40, 50).

2. Procédé selon la revendication 1, dans lequel au moins deux desdites interfaces physiques (NIC1, NIC2, ..., NICn) sont différentes les unes des autres.

3. Procédé selon la revendication 1 ou 2, dans lequel au moins deux desdites interfaces physiques (NIC1, NIC2, ..., NICn) présentent des vitesses maximales différentes, les paquets étant transmis à travers chaque interface physique (NIC1, NIC2, ..., NICn) à la vitesse du canal de transport de ladite interface physique.

4. Procédé selon l'une quelconque des revendications précédentes, dans lequel ladite couche de protocole déterminée (Demux Layer, L+1) est une couche de démultiplexage ou de multiplexage inverse.

5. Procédé selon l'une quelconque des revendications précédentes, dans lequel ladite étape consistant à commander l'insertion de paquets (pᵢ) dans lesdites files d'attente de sortie (Output_1, Output_2, ..., Output_n) au moyen de ladite pluralité de processus (SenderQ_1, SenderQ_2, ..., SenderQ_n) comprend les étapes ci-dessous :
- chacun desdits processus (SenderQ_1, SenderQ_2, ..., SenderQ_n) surveille l'état de sa file d'attente de sortie correspondante (Output_1, Output_2, ..., Output_n) ; et
- lesdits processus (SenderQ_1, SenderQ_2, ..., SenderQ_n) sont en concurrence entre eux pour envoyer des paquets (pᵢ) de ladite file d'attente d'entrée (InputQueue) à leur file d'attente de sortie correspondante (Output_1, Output_2, ..., Output_n).

6. Procédé selon l'une quelconque des revendications précédentes, dans lequel ladite étape consistant à commander l'insertion de paquets (pᵢ) dans lesdites files d'attente de sortie (Output_1, Output_2, ..., Output_n) au moyen de ladite pluralité de processus (SenderQ_1, SenderQ_2, ..., SenderQ_n) comprend les étapes ci-dessous :
- chaque processus (SenderQ_1, SenderQ_2, ..., SenderQ_n) analyse la charge de paquets accumulée au niveau de sa file d'attente de sortie associée (Output_1, Output_2, ..., Output_n) ; et
- si la file d'attente de sortie (Output_1) d'un processus (SenderQ_1) est pleine au-delà d'un certain seuil (OutQMax), ledit processus (SenderQ_1) ne cherche pas à évacuer un paquet déterminé (pᵢ) de la file d'attente d'entrée (InputQueue) ; tandis que
- si le nombre de paquets d'une file d'attente de sortie (Output_n) est inférieur (OutQ) ou égal à un certain seuil (OutQMax), le processus (SenderQ_n) commandant ladite file d'attente de sortie (Output_n) tente d'évacuer un paquet déterminé (pᵢ) de la file d'attente d'entrée (InputQueue) en vue de l'insérer dans sa file d'attente de sortie associée (Output_n), le processus qui appelle le premier la file d'attente d'entrée (InputQueue) est le seul à la mettre en oeuvre.

7. Procédé selon l'une quelconque des revendications précédentes, dans lequel chaque file d'attente de sortie (Output_1, ..., Output_n) est vidée selon la vitesse de l'interface physique qui lui est associée (NIC1, NIC2, ..., NICn).

8. Procédé selon l'une quelconque des revendications précédentes, dans lequel, préalablement à ladite étape consistant à stocker, dans ladite file d'attente d'entrée (InputQueue), ladite pluralité de paquets (pᵢ) en provenance d'une couche de protocole d'ordre supérieur (IP, L), l'étape ci-dessous est mise en oeuvre :
- ré-encapsuler lesdits paquets (pᵢ) et leur affecter un numéro de séquence respectif en vue de faciliter leur tri subséquent au niveau de l'extrémité de réception.

9. Procédé selon l'une quelconque des revendications précédentes, dans lequel ladite couche de protocole déterminée (Demux Layer, L+1) est mise en oeuvre dans la couche d'application et, plus précisément, au niveau du protocole de transport en temps réel (RTP).

10. Procédé destiné à recevoir des paquets par le biais d'une application d'un équipement récepteur, dans lequel lesdits paquets ont été envoyés à travers un réseau en mode paquet (40, 50), et dans lequel la vitesse de transmission desdits paquets est supérieure à la capacité de transmission du canal de transport d'une connexion dudit réseau en mode paquet (40, 50), **caractérisé en ce que** lesdits paquets ont été envoyés selon un procédé de transmission de paquets selon l'une quelconque des revendications 1 à 9.

11. Procédé selon l'une quelconque des revendications précédentes, comprenant l'étape consistant à trier et récupérer des paquets au moyen de la mise en oeuvre d'un mécanisme basé sur l'un des aspects suivants : sur la duplication de paquets pour minimiser la probabilité de perte, sur une fenêtre temporelle, sur une fenêtre séquentielle, sur une différence d'estampille temporelle, sur la dispersion au sein d'une fenêtre de tri.

12. Procédé selon l'une quelconque des revendications précédentes, comprenant l'étape consistant à récupérer des paquets par le biais d'un accusé de réception négatif.

13. Procédé selon l'une quelconque des revendications précédentes, dans lequel lesdits paquets sont transmis par l'intermédiaire d'un réseau de téléphonie mobile qui est connecté audit réseau en mode paquet (40, 50), et lesdites interfaces physiques (NIC1, NIC2, ..., NICn) sont choisies dans le groupe suivant : GPRS, EDGE, 3G, HSUPA et Ethernet.

14. Système de transmission de paquets comprenant :
- un équipement émetteur comprenant une application déterminée ;
- un réseau en mode paquet (40, 50) ;
- un équipement récepteur comprenant cette même application déterminée,
dans lequel la vitesse de transmission desdits paquets est supérieure à la capacité de transmission du canal de transport d'une connexion dudit réseau en mode paquet (40, 50) ; **caractérisé en ce que** ledit équipement émetteur comprend des moyens pour exécuter les étapes du procédé selon l'une quelconque des revendications 1 à 9.

15. Système selon la revendication 14, dans lequel ledit équipement récepteur comprend des moyens pour mettre en oeuvre le procédé selon la revendication 10.
